# EUROPEAN PATENT APPLICATION

(11) **EP 1 580 653 A1**
(43) Date of publication of application: **28.09.2005**
(21) Application number: 05251743.0
(22) Date of filing: 22.03.2005
(51) Int. Cl.: G06F 3/033

(54) **A computer mouse**

(30) Priority: 25.03.2004 US 808837
(71) Applicant: Wai Ko Electronics Limited, Tsuen Wan N.T., Hong Kong (CN)
(72) Inventor: Leung, Willie Flat 8-10,16F,Block A, Tsuen Wan, N.T. (HK); Leung, Alan Wai-Lun Flat 8-10,16F,Block A, Tsuen Wan, N.T. (HK)
(74) Representative: Wilson, Peter

(57) **Abstract**

A computer mouse includes a mouse body having a flat base for moving over a flat surface, one or more key-activated electrical switches, each having an activation direction parallel to the base, and a wrist support extending from the mouse body.

## Description

### Background of the Invention

The present invention relates to a computer mouse. More particularly, although not exclusively, the invention relates to a computer mouse having horizontally activated keys and a built-in wrist support.

Known computer mice comprise a motion detection device for transmission of mouse movements to cause corresponding motion of a graphic pointer on a computer monitor and a plurality of top surface-mounted buttons for "left clicking", "right clicking" and "double-clicking" the graphic pointer. When using such computer mice, one usually rests his or her wrist against the desktop over which the mouse traverses, and manipulates the mouse with his or her fingers and thumb. After hours of computer use, the hand can suffer from fatigue. Various wrist cushions have been proposed to support the wrist, but such cushions remain in place upon the desk surface, requiring fatigue-inducing repetitious movement of the hand and fingers whilst the palm is held in a raised position.

The downward-depressing buttons of known computer mice require the user to suspend his or her fingers continuously between button depressions and this is also a fatigue-inducing practice.

### Objects of the Invention

It is an object of the present invention to overcome or substantially ameliorate at least one of the above disadvantages and/or more generally to provide an improved computer mouse.

### Disclosure of the Invention

There is disclosed herein a computer mouse comprising:
a mouse body having a substantially flat base for moving over a substantially flat surface,
one or more key-activated electrical switches, each having an activation direction substantially parallel to the base, and
a wrist support extending from the mouse body.

Preferably, the computer mouse further comprises one or more keys positioned at a forward edge of the mouse body and activating the electrical switches.

Preferably, the wrist support is fixed to the mouse body.

Alternatively, the wrist support is attached to the mouse body in an adjustable manner.

Preferably, the computer mouse further comprises a bridge extending between the mouse body and the wrist support, the bridge comprising a rack that interacts with a gear mounted within the mouse body.

Preferably, the bridge comprises a pair of said racks and the mouse body has a pair of said gears and wherein said pair of gears are in mesh with each other.

Preferably, the wrist support comprises a wrist support base that is substantially co-planar with the flat base of the mouse body.

### Brief Description of the Drawings

Preferred forms of the present invention will now be described by way of example with reference to the accompanying drawings, wherein:
Fig. 1 is a schematic perspective illustration of a first computer mouse having an integral wrist-support cushion,
Fig. 2 is another schematic perspective illustration of the computer mouse of Fig. 1,
Fig. 3 is a schematic parts-exploded perspective illustration of the computer mouse of Figs. 1 and 2,
Fig. 4 is a schematic plan view of an alternative computer mouse having a wrist-support cushion attached movably to the mouse body -- the figure showing the mouse cushion extended away from the mouse body, and
Fig. 5 is a schematic plan view of the computer mouse of Fig. 4 having its wrist-supporting cushion retracted toward the mouse body.

### Description of the Preferred Embodiments

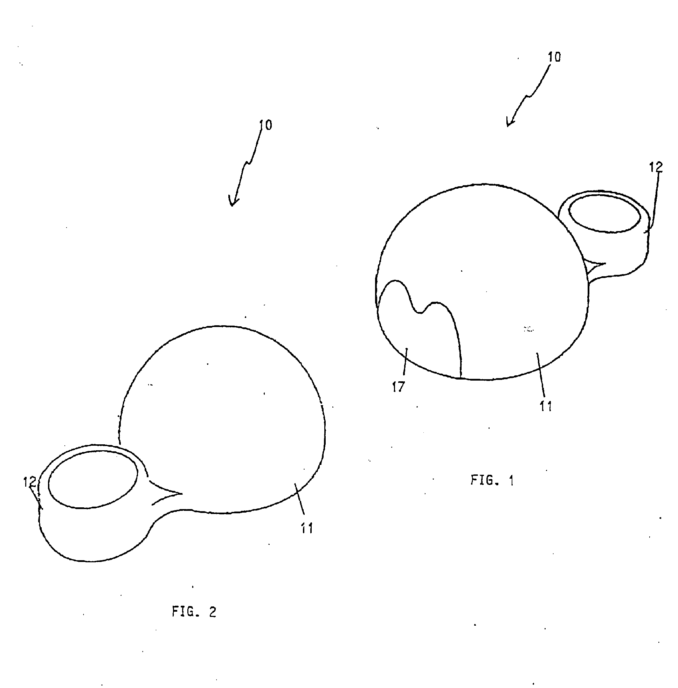

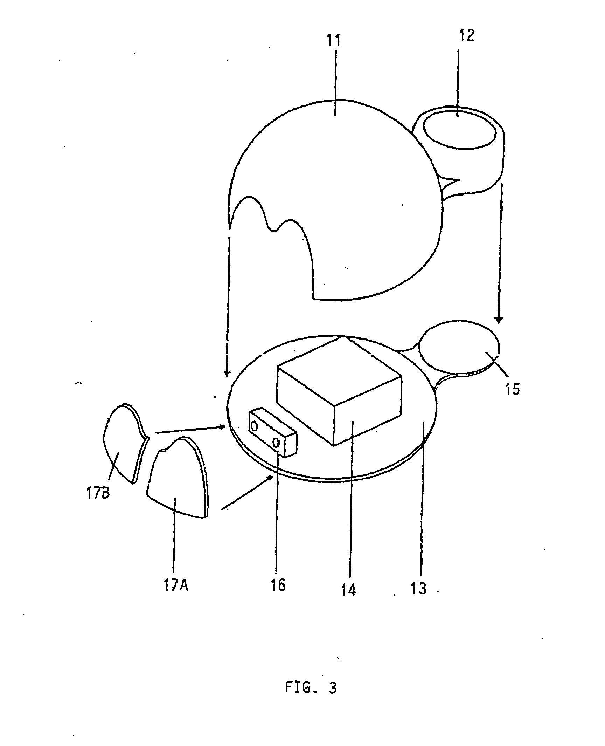

In Figs. 1 to 3 of the accompanying drawings there is depicted schematically a computer mouse 10. The mouse 10 comprises a mouse body 11 and a wrist support 12 extending from the mouse body 11.

The mouse body 11 has a base 13 upon which there is supported a motion detector 14. This device will not be described in detail - suffice to say that it might comprise a rolling ball or laser mechanism known in the art. A wrist support base 15 is formed as an integral extension of the mouse body base 13.

The mouse can communicate with a computer by cable connection or wireless connection known in the art.

Mounted upon the base 13 and forward of the motion detector device 14 is a pair of electrical switches 16. These switches are activated in a direction parallel to the plane of the base 13. Moreover, the switches are triggered in a direction toward the back of the mouse (i.e. toward the wrist support 12).

A single key 17 or pair of keys 17A and 17B is/are mounted to the mouse body 11 in front of the switches 16 and when depressed in the backwards direction will bear against the switches to activate them.

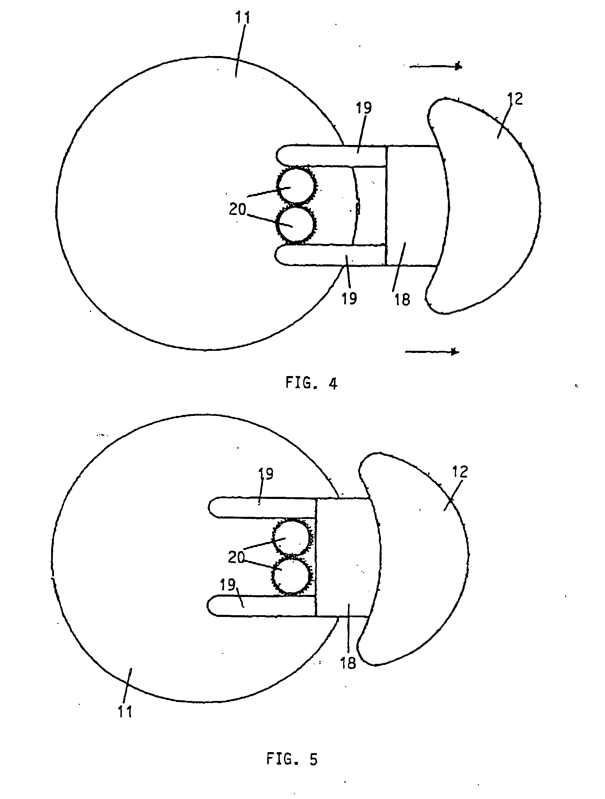

In Figs. 4 and 5 of the accompanying drawings there is depicted schematically an alternative mouse 100 having a mouse body 11 and a separately formed wrist support 12. There is a bridge 18 comprising a pair of racks 19 extending from the wrist support 12 into the mouse body 11. A pair of intermeshing gears 20 are mounted within the mouse body and each mesh with inward facing teeth on a respective one of the racks 19. Interaction of the gears 20 with the racks 19 provides significant resistance so that any desired position of the wrist support 12 with respect to the mouse body 11 is maintained - once set.

In use, one places the palm of his or her hand upon the upper surface of the mouse body 10 such that his or her fingers reside in front of the key 17 or keys 17A and 17B. The user's wrist can rest upon the wrist support 12. The mouse can be manoeuvred easily upon a flat surface and the key 17 or keys 17A and 17B can be depressed in a direction back toward the wrist as desired.

It should be appreciated that modifications and alterations obvious to those skilled in the art are not to be considered as beyond the scope of the present invention. For example, a mouse wheel can be incorporated into the design and any manner of conveniently adjusting the length of the bridge 18 can be adopted without departing from the scope of the invention.

## Claims

1. A computer mouse (10) comprising:
a mouse body (11) having a substantially flat base (13) for moving over a substantially flat surface,
one or more key-activated electrical switches (16), each having an activation direction substantially parallel to the base, and
a wrist support (12) extending from the mouse body (11).

2. The computer mouse of Claim 1 further comprising one or more keys (17) positioned at a forward edge of the mouse body and activating the electrical switches.

3. The computer mouse of Claim 1 or Claim 2 wherein the wrist support is fixed to the mouse body.

4. The computer mouse of Claim 1 or Claim 2 wherein the wrist support is attached to the mouse body in an adjustable manner.

5. The computer mouse of Claim 4 further comprising a bridge (18) extending between the mouse body and the wrist support, the bridge (18) comprising a rack (19) that interacts with a gear (20) mounted within the mouse body.

6. The computer mouse of Claim 5 wherein the bridge comprises a pair of said racks (19) and a pair of said gears (20) and wherein said pair of gears are in mesh with each other.

7. The computer mouse according to any preceding claim, wherein the wrist support comprises a wrist support base (15) that is substantially co-planar with the flat base of the mouse body.
